# EUROPÄISCHE PATENTSCHRIFT

(11) **EP 2 224 573 B1**
(45) Veröffentlichungstag und Bekanntmachung des Hinweises auf die Patenterteilung: **30.12.2020**
(21) Anmeldenummer: 09014260.5
(22) Anmeldetag: 14.11.2009
(51) Int. Cl.: H04M 1/04, H02J 7/00

(54) **Elektrisches Installationsgerät mit Ladegerät und Ablagemöglichkeit für Mobiltelefon**
Electric installation device with charging device and storage option for mobile telephone
Appareil d'installation électrique doté d'un appareil de chargement et d'une possibilité de dépôt pour téléphone mobile

(30) Priorität: 27.02.2009 DE 102009010715; 06.05.2009 DE 102009021449
(43) Veröffentlichungstag der Anmeldung: 01.09.2010
(73) Patentinhaber: ABB Schweiz AG, 5400 Baden (CH)
(72) Erfinder: Treude, Hans Jörg, 58638 Iserlohn (DE); Heite, Christian, 58553 Halver (DE)
(74) Vertreter: Marks, Frank

(56) Entgegenhaltungen:
- EP-A1- 0 027 959
- EP-A2- 0 724 347
- EP-A2- 2 239 825
- DE-U1-202008 006 884
- JP-A- H06 113 470
- US-A1- 2007 249 196
- US-A1- 2008 012 423
- US-A1- 2009 015 192

## Beschreibung

Die Erfindung betrifft ein elektrisches Installationsgerät mit Ladegerät und Ablagemöglichkeit für ein Mobiltelefon.

Zur Aufladung des Akkumulators eines Mobiltelefons ist eine Vielzahl von Ladegeräten bekannt. Um ein Mobiltelefon aufladen zu können, muss man das dazugehörige/ passende Ladegerät zur Hand haben, mit dem aufzuladenden Mobiltelefon verbinden und den Stecker des Ladegerätes in eine verfügbare Steckdose einstecken. In unmittelbarer Nähe dieser Steckdose ist dabei oft eine Ablagemöglichkeit für das Mobiltelefon nicht vorhanden. Der Aufbau ist "lose" und "fliegend", d.h. es besteht z.B. das Risiko, dass eine Person über das Netzkabel stolpert oder dass das Netz-kabel störend auf der Küchen-Arbeitsplatte liegt und hier den Arbeitsbereich einschränkt.

Eine Batterieladevorrichtung mit einem in Form eines Unterputz-Gerätes für ein Mobiltelefon ist aus der JP H06 113470 1 bekannt.

Aus der DE 20 2008 006 884 U1 ist ein Träger für eine Steckdose bekannt, der an einem Steckdosen-Hauptkörper angebracht ist und eine Stirnplatte aufweist, die einen formschlüssig mit dem Steckdosen-Hauptkörper verbindbaren Rastabschnitt und eine Tragplatte besitzt, wobei eine Seite der Tragplatte durch wenigstens ein Gelenkelement schwenkbar mit der Stirnplatte verbunden ist, und die Tragplatte wenigstens eine Ausnehmung aufweist.

Der Erfindung liegt die Aufgabe zugrunde, eine Vorrichtung anzugeben, welche das Aufladen eines Mobiltelefons erleichtert.

Diese Aufgabe wird erfindungsgemäß gelöst durch ein elektrisches Installationsgerät nach Anspruch 1 mit einem in Form eines Unterputz-Gerätes ausgebildeten und in eine handelsübliche Unterputzdose montierbaren Gerätesockel, welcher ein Ladegerät, insbesondere ein Universalladegerät und einen elektrischen Anschluss für ein Wechselspannungsnetz aufweist, wobei frontseitig des Gerätesockels ein Ladeanschlussstecker für den Anschluss eines Mobiltelefons und ein Universalhalter für die Ablage/Halterung dieses Mobiltelefon vorgesehen sind.

Die mit der Erfindung erzielbaren Vorteile bestehen insbesondere darin, dass ein Universalladegerät respektive eine an einem dem Anwender bekannten Ort fest installierte, platzsparende Ladestation für nahezu alle gängigen Marken und Typen von Mobiltelefonen als Unterputzgerät in einer handelsüblichen Unterputzdose geschaffen wird. Es ergibt sich ein einfacher Anschluss des Mobiltelefons durch Aufklappen einer Klappe und Verbinden mit dem dahinterliegenden Ladeanschlussstecker. Das Mobiltelefon wird während des Ladevorganges sicher im Universalhalter gehalten. Es entfällt jegliches Suchen des passenden Ladegerätes, die Ladestation befindet sich vielmehr immer am gleichen Ort. Zudem kann auch das Mobiltelefon bei Nichtgebrauch einen festen, bekannten Platz im Universalhalter der Ladestation erhalten (auch ohne dass es aufzuladen ist). Es ist eine formschöne Einbindung/Integration in ein Installationsgeräte-Programm respektive Schalter- und Steckdosenprogramm sowie eine Kombination mit weiteren Geräten, beispielsweise Schaltern/Tastern/Dimmern/Steckdosen, dieses Schalter- und Steckdosenprogramms möglich.

Bei einem Neukauf eines Mobiltelefons wird die vorgeschlagene Ladestation selbstverständlich weiterverwendet. Hierdurch ergibt einerseits ein Kostenvorteil, da der Kauf eines neuen Ladegerätes entfällt, andererseits ergibt sich eine Senkung von Industriemüll und damit letztlich eine Senkung des CO2-Ausstosses.

Zweckmäßige Ausgestaltungen der Erfindung sind in den Unteransprüchen gekennzeichnet.

Die Erfindung wird nachstehend an Hand der in der Zeichnung dargestellten Ausführungsbeispiele näher erläutert. Es zeigen:
- Fig. 1: einen seitlichen Schnitt durch ein elektrisches Installationsgerät mit Ladegerät und Ablagemöglichkeit für ein Mobiltelefon,
- Fig. 2 - 4: perspektivische Ansichten eines nicht beanspruchten elektrischen Installationsgerätes mit einer seitlich zu öffnenden Klappe,
- Fig. 5 - 8: perspektivische Ansichten eines erfindungsgemäßen elektrischen Installationsgerätes mit einer nach unten zu öffnenden Klappe,
- Fig. 9 - 12: Anschlussschemata für unterschiedliche Gerätetypen von Mobiltelefonen.

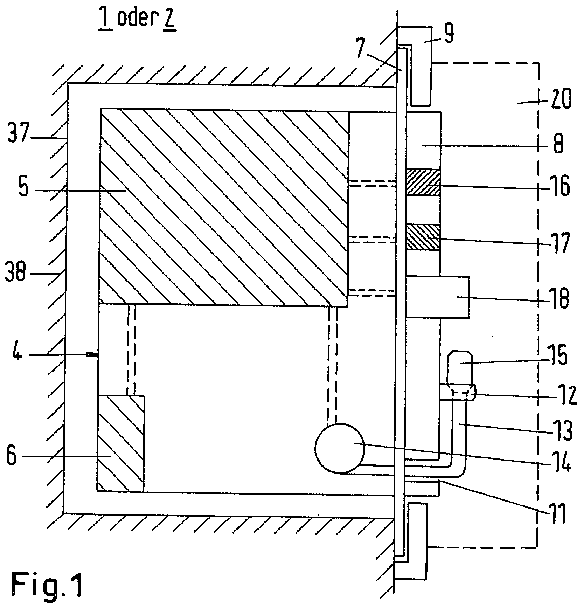

In Fig. 1 ist ein seitlicher Schnitt durch ein elektrisches Installationsgerät mit Ladegerät und Ablagemöglichkeit für ein Mobiltelefon dargestellt. Das elektrische Installationsgerät 1 oder 2 ist in Form eines UP-(Unterputz)-Gerätes mit einem Gerätesockel 4 (Unterputzeinsatz) ausgebildet, welcher ein Ladegerät 5 inklusive eines Transformators, insbesondere ein für unterschiedliche Mobiltelefone geeignetes Universalladegerät beinhaltet. Ein elektrischer Anschluss 6 des Gerätesockels 4 stellt die elektrische Verbindung zu einem Wechselspannungsnetz her (Netzanschluss) und dient optional auch als Busanschluss. Der Gerätesockel 4 ist über seinen Tragring 7 und/oder über Federspreizen mechanisch mit einer Unterputzdose 37 verbunden, welche in einer Wand 38 installiert ist.

Das elektrische Installationsgerät 1 oder 2 wird komplettiert durch eine frontseitig zugängliche Zentralscheibe 8, einen Abdeckrahmen 9 und einen Universalhalter 20, d. h. eine Universalaufnahme oder Parkstation, welche eine Ablagemöglichkeit für ein Mobiltelefon darstellt.

Die Zentralscheibe 8 weist eine Bohrung 11 zur Durchführung eines Ladekabels 13 auf. Am außen zugänglichen Ende des Ladekabels 13 ist ein Ladeanschlussstecker 15, insbesondere eine Micro-USB-Standard-Schnittstelle montiert. Optional kann im Gerätesockel 4 eine Ladekabel-Aufrollvorrichtung 14 vorhanden sein. Des Weiteren kann die Zentralscheibe 8 optional aufweisen:
- eine Halterung 12 für den Ladeanschlussstecker 15,
- eine optische Anzeige 16 (vorzugsweise mindestens eine LED) zur Signalisierung des Ladevorganges (rote LED kennzeichnet den Ladestatus, grüne LED signalisiert einen geladenen Mobiltelefon-Akkumulator),
- eine akustische Anzeige 17 zur Signalisierung des Ladevorgang-Endes,
- einen Ein/Aus-Schalter 18 zum Einschalten/Abschalten des Ladegeräts.

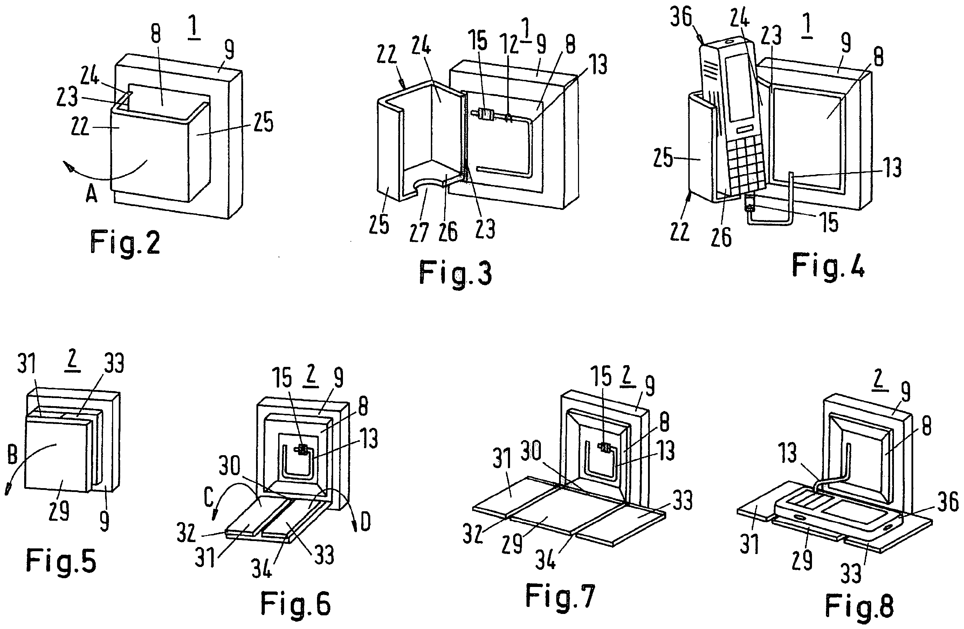

Die Montage des Installationsgerätes 1 oder 2 erfolgt zweckmäßig in "Griffhöhe", z. B. in Kabelkanälen oder im Küchenbereich (oberhalb der Arbeitsplatte). Die in Fig. 1 lediglich schematisch unter Bezugsziffer 20 skizzierte Ablagemöglichkeit für ein Mobiltelefon kann auf unterschiedliche Art und Weise realisiert werden. In den nachfolgenden Figuren sind zwei Alternativen dargestellt, wobei
- die nicht beanspruchte erste Alternative gemäß den Figuren 2 - 4 ein elektrisches Installationsgerät 1 mit einer seitlich zu öffnenden Klappe beinhaltet, welches eine "stehende" Ablage eines Mobiltelefons ermöglicht und
- die erfindungsgemäße zweite Alternative gemäß den Figuren 5 - 8 ein elektrisches Installationsgerät 2 mit nach unten zu öffnender Klappe beinhaltet, welches eine "liegende" Ablage eines Mobiltelefons ermöglicht.

In den Fig. 2 - 4 sind perspektivische Ansichten eines nicht beanspruchten elektrischen

Installationsgerätes mit einer seitlich zu öffnenden Klappe dargestellt. Bei diesem elektrischen Installationsgerät 1 ist eine Klappe 22 über ein seitliches Scharniergelenk 23 an der Zentralscheibe 8 respektive am Gerätesockel 4 befestigt. Diese bei geschlossener Position über den Abdeckrahmen 9 greifende Klappe 22 weist drei seitliche Begrenzungswände 24, 25, 26 auf, wobei die seitliche Begrenzungswand 23 auch als untere Begrenzungswand bezeichnet wird und eine Ausnehmung 27 aufweist, durch welche der in die Ladeanschlussbuchse eines Mobiltelefons 36 (Mobilfunkgerät, Handy) eingesteckte Ladeanschlussstecker 15 greifen kann.

Nach Öffnung, d. h. Schwenken der Klappe 22 um ungefähr 90° - siehe Pfeil A in Fig. 2 - kann der Ladeanschlussstecker 15 aus der Halterung 12 genommen und in die Ladeanschlussbuchse des Mobiltelefons 36 gesteckt werden, wobei die Ladekabel-Aufrollvorrichtung 14 durch kurzzeitige Verlängerung des zugänglichen Ladekabels 13 diesen Vorgang erleichtert. Das Mobiltelefon 36 wird nun in den durch die Begrenzungswände 24, 25, 26 umgrenzten Innenraum respektive "Tasche" der Klappe 22 von oben oder seitlich eingeschoben und auf die untere Begrenzungswand 26 gestellt, so dass das Mobiltelefon 36 während des Ladevorganges sicher gehalten wird.

Durch Einschalten des Ein/Aus-Schalters 18 wird der Aufladevorgang des Akkumulators des Mobiltelefons 36 gestartet. Zweckmäßig signalisiert eine optische Anzeige 16 in Form einer roten LED den Aufladevorgang. Sobald der Ladevorgang beendet ist, wird dies durch eine optische Anzeige 16 in Form einer grünen LED und gegebenenfalls zusätzlich auch durch eine akustische Anzeige 17 signalisiert, d. h. der Ladeanschlussstecker 15 wird nunmehr aus der Ladeanschlussbuchse des Mobiltelefons 36 gezogen und das Mobiltelefon 36 kann aus dem Universalhalter 20 respektive der Universalaufnahme und Parkstation entnommen werden. Die optische Anzeige 16 verlischt, der Ein/Aus-Schalter 18 wird abgeschaltet und abschließend wird die Klappe 22 in die geschlossene Position geschwenkt.

In den Fig. 5 - 8 sind perspektivische Ansichten eines erfindungsgemäßen elektrischen Installationsgerätes mit einer nach unten zu öffnenden Klappe dargestellt. Bei diesem elektrischen Installationsgerät 2 ist eine Klappe 29 über ein unteres Scharniergelenk 30 an der Zentralscheibe 8 respektive am Gerätesockel 4 befestigt. Diese bei geschlossener Position über den Abdeckrahmen 9 greifende Klappe 29 weist zwei seitliche Klappen 31 bzw. 33 auf, welche über Scharniergelenke 32 bzw. 34 mit der Klappe 29 verbunden sind.

Soll ein Mobiltelefon 36 geladen werden, wird zunächst die Klappe 29 um ungefähr 90° nach unten geschwenkt - siehe Pfeil B in Fig. 5 - wonach die beiden Klappen 31 bzw. 33 seitlich um ungefähr jeweils 180° geschwenkt werden - siehe Pfeile C bzw. D in Fig. 6. Es ergibt sich die in Fig. 7 gezeigte, aus den drei nebeneinander in einer Ebene angeordneten Klappen 31/29/33 gebildete, ausreichend große Ablagefläche respektive Ablagemöglichkeit für ein Mobiltelefon 36, wobei es vorteilhaft ist, dass diese Ablagemöglichkeit universell für Mobiltelefone unterschiedlicher Größe und unterschiedlicher Abmessungen geeignet ist. Nun kann der Ladeanschlussstecker 15 aus der Halterung 12 genommen und in die Ladeanschlussbuchse des Mobiltelefons 36 gesteckt werden, wobei die Ladekabel-Aufrollvorrichtung 14 durch kurzzeitige Verlängerung des zugänglichen Ladekabels 13 diesen Vorgang erleichtert. Das Mobiltelefon 36 wird nun auf die Klappen 31/29/33 abgelegt, wie dies Fig. 8 zeigt. Durch Einschalten des Ein/Aus-Schalters 18 wird der Aufladevorgang des Akkumulators des Mobiltelefons 36 gestartet. Zweckmäßig signalisiert eine optische Anzeige 16 in Form einer roten LED den Aufladevorgang. Sobald der Ladevorgang beendet ist, wird dies durch eine optische Anzeige 16 in Form einer grünen LED und gegebenenfalls zusätzlich auch durch eine akustische Anzeige 17 signalisiert, d. h. der Ladeanschlussstecker 15 wird nunmehr aus der Ladeanschlussbuchse des Mobiltelefons 36 gezogen und das Mobiltelefon 36 kann aus der durch die Klappen 31/29/33 gebildeten Ablagemöglichkeit entnommen werden. Die optische Anzeige 16 verlischt, der Ein/Aus-Schalter 18 wird abgeschaltet und abschließend wird die Klappe 22 in die geschlossene Position geschwenkt.

Für beide Alternativen gilt selbstverständlich, dass bei einer einfacheren Ausführungsform ohne Ein/Aus-Schalter 18 der Aufladevorgang des Akkumulators des Mobiltelefons 36 automatisch durch Einstecken des Ladeanschlusssteckers 15 in die Ladeanschlusssteckbuchse des Mobiltelefons 36 gestartet wird.

Für beide Varianten gilt, dass auch eine optische Anzeige in Form eines Displays realisierbar ist, welches sämtliche Informationen zum Ladevorgang und/oder Status des Mobiltelefons anzeigt. Darüber hinaus sind auch eingehende SMS, Anrufe, Mails usw. des angeschlossenen Mobiltelefons 36 mittels des Displays anzeigbar. Die Kommunikation zwischen dem elektrischen Installationsgerät 1 oder 2 und dem Display erfolgt zweckmäßig über den erwähnten elektrischen Anschluss 6 (Busanschluss).

Für beide Varianten gilt auch, dass die Konfiguration mit Ladeanschlussstecker 15 durch entsprechende austauschbare Adapter derart umgestaltet werden kann, dass Mobiltelefon-Gerätetypen verschiedener Hersteller an ein und demselben Installationsgerät 1, 2 angeschlossen und aufgeladen werden können.

Gemäß einer hierzu alternativen Ausgestaltung können auch austauschbare Ladekabel 13A, 13B... mit jeweils unterschiedlichen Ladeanschlusssteckern zur Verfügung gestellt werden, wobei die austauschbaren Ladekabel über elektrische Steckkontakte für die elektrische Verbindung mit einer in der Zentralscheibe 8 angeordneten und elektrisch mit dem Ladegerät 5 verbundenen Schnittstelle verfügen.

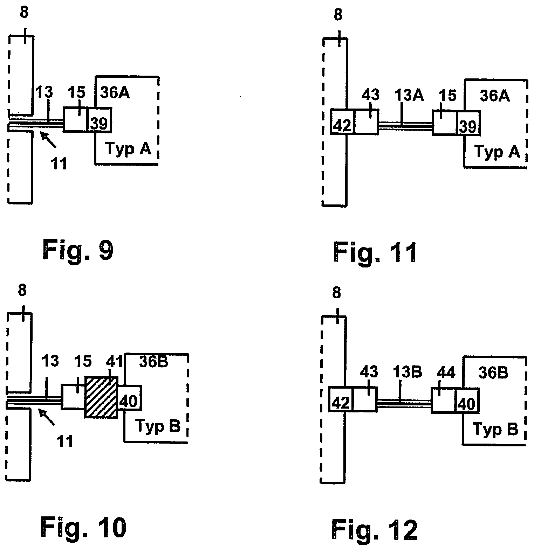

In den Fig. 9 - 12 sind hierzu Anschlussschemata für unterschiedliche Gerätetypen von Mobiltelefonen dargestellt:
Bei den Figuren 9 und 10 liegt die in den vorstehenden Figuren 1 - 8 erläuterte Konfiguration mit einer Zentralscheibe 8 vor, welche eine Bohrung 11 zur Durchführung des fest mit dem Installationsgerät verbundenen Ladekabels 13 aufweist. Endseitig des Ladekabels 13 ist der Ladeanschlussstecker 15 vom Gerätetyp A angebracht, welcher unmittelbar mit einer Ladeanschlusssteckbuchse 39 eines Mobiltelefons 36A vom Gerätetyp A kontaktierbar ist, wie dies auch in Fig. 9 dargestellt ist. Soll jedoch der Akkumulator eines Mobiltelefons 36B vom Gerätetyp B aufgeladen werden, wird zusätzlich ein Adapter 41 für die Umsetzung vom Gerätetyp A auf den Gerätetyp B eingesetzt, der einerseits in die Ladeanschlusssteckbuchse 40 des Mobiltelefons 36B vom Gerätetyp B eingesteckt wird und in den andererseits der Ladeanschlussstecker 15 des Ladekabels 13 eingesteckt wird, wie dies in Fig. 10 dargestellt ist.
Bei den Figuren 11 und 12 ist das Ladekabel nicht fest, sondern lösbar mit dem Installationsgerät respektive der Zentralscheibe 8 verbunden und es sind wahlweise unterschiedliche Ladekabel 13A, 13B für unterschiedliche Mobiltelefone 36A, 36B von unterschiedlichen Gerätetypen A oder B verfügbar und einsetzbar. Für die lösbare Verbindung besitzt die Zentralscheibe 8 eine Schnittstellenbuchse 42, in welche wahlweise das Ladekabel 13A oder 13B mit seinem Schnittstellenstecker 43 eingesteckt wird. Am weiteren Ende des Ladekabels 13A respektive des Ladekabels 13B ist ein Ladeanschlussstecker 15 vom Gerätetyp A respektive ein Ladeanschlussstecker 44 vom Gerätetyp B für die Kontaktierung mit einer Ladeanschlusssteckbuchse 39 eines Mobiltelefons 36A vom Gerätetyp A respektive mit einer Ladeanschlusssteckbuchse 40 eines Mobiltelefons 36B vom Gerätetyp B angebracht. Auf diese Weise ist es durch Auswahl und Einstecken des passenden Ladekabels 13A oder 13B möglich, den Akkumulator von Mobiltelefonen unterschiedlicher Gerätetypen nachzuladen.

Selbstverständlich beschränken sich die Ausführungsbeispiele gemäß den Figuren 9 - 12 nicht lediglich auf zwei unterschiedliche Gerätetypen A und B von Mobiltelefonen, sondern durch entsprechend unterschiedlich ausgebildete Adapter 41 respektive unterschiedliche Ladekabel 13A, 13B...sind beliebig viele unterschiedliche Gerätetypen von Mobiltelefonen an das Installationsgerät anschließbar.

### Bezugszeichenliste

- 1: elektrisches Installationsgerät in Form eines UP-Gerätes
- 2: elektrisches Installationsgerät in Form eines UP-Gerätes
- 3: ---
- 4: Gerätesockel (Unterputzeinsatz)
- 5: Ladegerät inklusive Transformator, insbesondere Universalladegerät
- 6: elektrischer Anschluss (Netzanschluss, gegebenenfalls Busanschluss)
- 7: Tragring
- 8: Zentralscheibe
- 9: Abdeckrahmen
- 10: ---
- 11: Bohrung zur Durchführung des Ladekabels
- 12: Halterung für Ladeanschlussstecker
- 13: 13 A oder 13 B Ladekabel
- 14: Ladekabel-Aufrollvorrichtung
- 15: Ladeanschlussstecker vom Gerätetyp A, insbesondere Micro-USB-Standard-Schnittstelle
- 16: optische Anzeige zur Signalisierung des Ladevorgangs
- 17: akustische Anzeige zur Signalisierung des Ladevorgang-Endes
- 18: Ein/Aus-Schalter für das Ladegerät
- 19: ---
- 20: Universalhalter, Universalaufnahme und Parkstation (Ablagemöglichkeit) für Mobiltelefon
- 21: ---
- 22: Klappe
- 23: Scharniergelenk
- 24: seitliche Begrenzungswand
- 25: seitliche Begrenzungswand
- 26: seitliche Begrenzungswand
- 27: Ausnehmung für Ladeanschlussstecker
- 28: ---
- 29: Klappe
- 30: Scharniergelenk
- 31: seitliche Klappe
- 32: Scharniergelenk
- 33: seitliche Klappe
- 34: Scharniergelenk
- 35: ---
- 36: 36A oder 36B Mobiltelefon vom Gerätetyp A oder B (Mobilfunkgerät, Handy) inklusive Akkumulator und Ladeanschlusssteckbuchse
- 37: Unterputzdose
- 38: Wand
- 39: Ladeanschlusssteckbuchse vom Gerätetyp A
- 40: Ladeanschlusssteckbuchse vom Gerätetyp B
- 41: Adapter zur Umsetzung von Gerätetyp A auf Gerätetyp B
- 42: Schnittstellenbuchse
- 43: Schnittstellenstecker
- 44: Ladeanschlussstecker vom Gerätetyp B

## Patentansprüche

1. Elektrisches Installationsgerät (2) mit einem in Form eines Unterputz-Gerätes ausgebildeten und in eine handelsübliche Unterputzdose (37) montierbaren Gerätesockel (4), welcher ein Ladegerät (5), insbesondere ein Universalladegerät, einen elektrischen Anschluss (6) für ein Wechselspannungsnetz aufweist und komplettiert wird durch eine frontseitig zugängliche Zentralscheibe (8) und einen Abdeckrahmen (9), wobei frontseitig des Gerätesockels (4) ein Ladeanschlussstecker (15) für den Anschluss eines Mobiltelefons (36) und ein Universalhalter (20) für die Ablage/Halterung dieses Mobiltelefon (36) vorgesehen sind, der Universalhalter (20) in Form einer um ungefähr 90° nach unten zu öffnenden, über ein unteres Scharniergelenk (3) an der Zentralscheibe (8) respektive am Gerätesockel (4) befestigten Klappe (29) ausgebildet ist, welche eine Auflagefläche zur Ablage des Mobiltelefons (36) bildet **dadurch gekennzeichnet, dass** mindestens eine seitliche, um ungefähr 180° schwenkbare Klappe (31, 33) über ein Scharniergelenk (32, 34) mit der Klappe (29) verbunden ist, um derart eine vergrößerte Auflagefläche zur Ablage des Mobiltelefons (36) zu schaffen.

2. Elektrisches Installationsgerät (2) nach Anspruch 1, **dadurch gekennzeichnet, dass** der Ladeanschlussstecker (15) in Form einer Micro-USB-Standard-Schnittstelle ausgebildet ist.

3. Elektrisches Installationsgerät (2) nach einem der vorstehenden Ansprüche, **dadurch gekennzeichnet, dass** der Ladeanschlussstecker (15) über ein frontseitig zugängliches Ladekabel (13) mit dem Ladegerät (5) verbunden ist.

4. Elektrisches Installationsgerät (2) nach Anspruch 3, **dadurch gekennzeichnet, dass** im Gerätesockel (4) eine Ladekabel-Aufrollvorrichtung (14) vorgesehen ist.

5. Elektrisches Installationsgerät (2) nach Anspruch 3, **dadurch gekennzeichnet, dass** eine Halterung (12) für den Ladeanschlussstecker (15) vorgesehen ist.

6. Elektrisches Installationsgerät (2) nach einem der vorstehenden Ansprüche, **dadurch gekennzeichnet, dass** eine optische Anzeige (16) zur Signalisierung des Ladevorgangs vorgesehen ist.

7. Elektrisches Installationsgerät (2) nach einem der vorstehenden Ansprüche, **dadurch gekennzeichnet, dass** eine akustische Anzeige (17) zur Signalisierung des Ladevorgang-Endes vorgesehen ist.

8. Elektrisches Installationsgerät (2) nach einem der vorstehenden Ansprüche, **dadurch gekennzeichnet, dass** ein Ein/Aus-Schalter zum Einschalten/Abschalten des Ladegeräts (5) vorgesehen ist.

9. Elektrisches Installationsgerät (2) nach einem der vorstehenden Ansprüche, **dadurch gekennzeichnet, dass** der Ladeanschlussstecker (15) durch entsprechende austauschbare Adapter (41) derart umgestaltbar ist, dass unterschiedliche Mobiltelefon-Gerätetypen mit unterschiedlichen Ladeanschlusssteckbuchsen (39, 40) an dem elektrischen Installationsgerät (2) anschließbar und aufladbar sind.

10. Elektrisches Installationsgerät (2) nach einem der vorstehenden Ansprüche, **gekennzeichnet durch** austauschbare Ladekabel (13A, 13B) mit jeweils unterschiedlichen Ladeanschlusssteckern (15, 44), wobei die austauschbaren Ladekabel (13A, 13B) über elektrische Kontakte für die elektrische Verbindung mit einer in der Zentralscheibe (8) angeordneten und mit dem Ladegerät (5) verbundenen Schnittstelle verfügen.

## Claims

1. Electrical installation device (2) having a device cap (4) which is in the form of a flush-mounted device, can be fitted in a commercially available flush-mounting box (37) and has a charger (5), in particular a universal charger, an electrical connection (6) for an AC voltage power supply system and is completed by a central panel (8) which is accessible at the front and a cover frame (9), wherein a charging connecting plug (15) is provided on the front face of the device cap (4) for the connection of a mobile telephone (36), as is a universal holder (20) for holding/cradling this mobile telephone (36), the universal holder (20) is in the form of a flap (29) which can be opened downward through approximately 90° and is attached via a lower film hinge (3) to the central panel (8) or to the device cap (4), which flap forms a resting surface for holding the mobile telephone (36), **characterized in that** at least one side flap (31, 33), which can be pivoted through approximately 180°, is connected via a film hinge (32, 34) to the flap (29) in order in this way to create a larger resting surface for holding the mobile telephone (36).

2. Electrical installation device (2) according to Claim 1, **characterized in that** the charging connecting plug (15) is in the form of a micro-USB standard interface.

3. Electrical installation device (2) according to either of the preceding claims, **characterized in that** the charging connecting plug (15) is connected to the charger (5) via a charging cable (13) which is accessible at the front.

4. Electrical installation device (2) according to Claim 3, **characterized in that** a charging cable rolling-up apparatus (14) is provided in the device cap (4).

5. Electrical installation device (2) according to Claim 3, **characterized in that** a holder (12) is provided for the charging connecting plug (15).

6. Electrical installation device (2) according to one of the preceding claims, **characterized in that** a visual indication (16) is provided for signalling the charging process.

7. Electrical installation device (2) according to one of the preceding claims, **characterized in that** an audible indication (17) is provided for signalling the end of the charging process.

8. Electrical installation device (2) according to one of the preceding claims, **characterized in that** an on/off switch is provided for switching the charger (5) on and off.

9. Electrical installation device (2) according to one of the preceding claims, **characterized in that** the charging connecting plug (15) is able to be reconfigured using corresponding interchangeable adapters (41) such that different mobile telephone device types with different charging connecting sockets (39, 40) are able to be connected and charged at the electrical installation device (2).

10. Electrical installation device (2) according to one of the preceding claims, **characterized by** interchangeable charging cables (13A, 13B) each having different charging connecting plugs (15, 44), wherein the interchangeable charging cables (13A, 13B) have electrical contacts for electrical connection to an interface arranged in the central panel (8) and connected to the charger (5).

## Revendications

1. Appareil d'installation électrique (2) comprenant une base d'appareil (4) qui est conçue sous la forme d'un appareil encastré, qui peut être montée dans une prise encastrée (37) disponible dans le commerce et qui comporte un chargeur (5), en particulier un chargeur universel, une borne électrique (6) destinée à un réseau à tension alternative et qui est complétée par un disque central (8) accessible par l'avant et par un cadre de recouvrement (9), un connecteur de charge (15) étant prévu pour connecter un téléphone mobile (36) et un support universel (20) étant prévu pour recevoir/maintenir ce téléphone mobile (36) à l'avant de la base d'appareil (4), le support universel (20) étant conçu sous la forme d'un volet (29) qui est fixé au disque central (8) ou à la base d'appareil (4) par le biais d'une articulation à charnière inférieure (3), qui peut s'ouvrir vers le bas sur environ 90° et qui forme une surface d'appui destinée à recevoir le téléphone mobile (36),
**caractérisé en ce que**
au moins un volet latéral (31, 33) apte à pivoter sur environ 180° est relié au volet (29) par le biais d'une articulation à charnière (32, 34) afin de créer une surface d'appui agrandie destinée à recevoir le téléphone mobile (36).

2. Appareil d'installation électrique (2) selon la revendication 1, **caractérisé en ce que** le connecteur de charge (15) est réalisé sous la forme d'une interface standard micro-USB.

3. Appareil d'installation électrique (2) selon l'une des revendications précédentes, **caractérisé en ce que** le connecteur de charge (15) est relié au chargeur (5) par le biais d'un câble de charge (13) accessible par l'avant.

4. Appareil d'installation électrique (2) selon la revendication 3, **caractérisé en ce qu'**un dispositif d'enroulement de câble de charge (14) est prévu dans la base d'appareil (4).

5. Appareil d'installation électrique (2) selon la revendication 3, **caractérisé en ce qu'**un support (12) est prévu pour le connecteur de charge (15).

6. Appareil d'installation électrique (2) selon l'une des revendications précédentes, **caractérisé en ce qu'**un indicateur optique (16) est prévu pour signaler le processus de charge.

7. Appareil d'installation électrique (2) selon l'une des revendications précédentes, **caractérisé en ce qu'**un indicateur acoustique (17) est prévu pour signaler la fin du processus de charge.

8. Appareil d'installation électrique (2) selon l'une des revendications précédentes, **caractérisé en ce qu'**un interrupteur marche/arrêt est prévu pour allumer/éteindre le chargeur (5).

9. Appareil d'installation électrique (2) selon l'une des revendications précédentes, **caractérisé en ce que** le connecteur de charge (15) peut être modifié par un adaptateur interchangeable approprié (41) de sorte que différents types d'appareils de téléphonie mobile comportant différentes prises de charge (39, 40) peuvent être connectés à l'appareil d'installation électrique (2) et chargés.

10. Appareil d'installation électrique (2) selon l'une des revendications précédentes, **caractérisé par** des câbles de charge interchangeables (13A, 13B) comportant chacun des connecteurs de charge différents (15, 44), les câbles de charge interchangeables (13A, 13B) disposant de contacts électriques destinés à la liaison électrique avec une interface disposée dans le disque central (8) et reliée à l'appareil de charge (5).
